# EUROPÄISCHE PATENTANMELDUNG

(11) **EP 1 829 803 A1**
(43) Veröffentlichungstag der Anmeldung: **05.09.2007**
(21) Anmeldenummer: 07405059.2
(22) Anmeldetag: 27.02.2007
(51) Int. Cl.: B65G 47/54

(54) **Transportvorrichtung zum Transport von Gegenständen zwischen zwei benachbarten Ebenen**

(30) Priorität: 02.03.2006 CH 3302006
(71) Anmelder: Gilgen Logistics AG, 3173 Oberwangen bei Bern (CH); Solystic S.A.S., 92257 Gentilly (FR)
(72) Erfinder: Wyss, Mark, 3174 Thörishaus (CH); Moullard, Eric, 26750 Saint Paul-les-Romans (FR)
(74) Vertreter: Ottow, Jens M.

(57) **Zusammenfassung**

Eine Transportvorrichtung (20) zum Transport von Gegenständen, insbesondere Behältern (B), von einer ersten Ebene (E1) auf eine zweite Ebene (E2), die parallel zur ersten Ebene (E1) neben und in etwa auf dem Niveau der ersten Ebene (E1) angeordnet ist, umfasst wenigstens einen endlos umlaufenden Riemen (27), der im Bereich der beiden Ebenen (E1, E2) parallel zu den Ebenen (E1, E2) verläuft, sowie Mittel (25; 29; 46, 47) zum Anheben der Gegenstände (B) während des Transports von der ersten (E1) zur zweiten Ebene (E2).

Bei einer solchen Vorrichtung wird eine starke Vereinfachung und hohe Funktionssicherheit dadurch erreicht, dass die Mittel zum Anheben der Gegenstände (B) ein auf dem Rücken des wenigstens einen Riemens (27) angeordnetes, sich über einen längeren Abschnitt des Riemens (27) erstreckendes Rückenprofil (29) umfassen, welches dem Riemen (27) eine erhöhte Dicke verleiht, und dass der wenigstens eine Riemen (27) relativ zu den beiden Ebenen (E1, E2) so angeordnet ist, dass er mit seinem Rücken ohne das Rückenprofil (29) auf dem Niveau der beiden Ebenen (E1, E2) oder darunter liegt und mit dem Rückenprofil (29) über das Niveau der beiden Ebenen (E1, E2) nach oben hinausragt.

## Beschreibung

### TECHNISCHES GEBIET

Die vorliegende Erfindung bezieht sich auf das Gebiet der Fördertechnik. Sie betrifft eine Transportvorrichtung zum Transport von Gegenständen gemäss dem Oberbegriff des Anspruchs 1.

### STAND DER TECHNIK

Es ist seit langem bekannt, zum automatischen Umsetzen von Gegenständen, z.B. Behältern oder dgl., von einer Rollenbahn auf eine andere benachbarte Rollenbahn sogenannte Zahnriemenumsetzer einzusetzen, die den Quertransport der Gegenstände quer zu den beiden parallelen Transportrichtungen der Rollenbahn bewirken. Die Zahnriemenumsetzer umfassen zwei oder mehr parallel laufende Endlos-Zahnriemen, welche die beiden Rollenbahnen horizontal durchsetzen und sich im nicht aktivierten Zustand knapp unterhalb der durch die Rollenbahnen vorgegebenen Transportebenen befinden. Soll ein Gegenstand von einer Rollenbahn auf die andere in Querrichtung umgesetzt werden, wird der Zahnriemenumsetzer insgesamt durch pneumatische oder andere Mittel soweit angehoben, dass der Obertrum der Endlos-Zahnriemen mit dem Rücken oberhalb der Transportebenen der Rollenbahnen liegt, den Gegenstand dadurch anhebt, und ihn quer zur anderen Rollenbahn hinüberbefördert. Nach Erreichen der anderen Rollenbahn wird der Zahnriemenumsetzer wieder abgesenkt und der Gegenstand dadurch auf der anderen Rollenbahn abgesetzt.

Vergleichbare Techniken mit anhebbaren Umsetzern sind beispielsweise aus den Druckschriften US-B2-6,581,749 oder US-A-5,609,236 oder US-B1-6,938,751 bekannt. Nachteilig ist bei diesen Lösungen, dass sie mechanisch und steuerungstechnisch sehr aufwändig sind, eine Vielzahl von bewegten Teilen aufweisen und störanfällig sind.

Bei einer anderen Lösung, wie sie beispielsweise in der Druckschrift US-A-4,200,178 offenbart ist, werden für den Quertransport Paare von in Querrichtung gegeneinander versetzt angeordneten Endlosketten eingesetzt, die an bestimmten Stellen nach oben herausstehende Nocken aufweisen. Die Ketten sind so synchronisiert und die Nocken sind so verteilt, dass sie gleichzeitig an verschiedenen Stellen unter den Boden des zu transportierenden Gegenstands gelangen und diesen anheben und mit sich transportieren. Nachteilig ist bei dieser Lösung der Einsatz von versetzten Kettenpaaren, der wenigstens vier Endlosketten erforderlich macht. Besonders nachteilig ist aber der punktuelle Eingriff der Nocken am Boden der Transportgegenstände, der bei Behältern mit strukturierten (z.B. mit Rippen versehenen) Böden nicht richtig funktioniert. Darüber hinaus sind die einzelnen Nocken und auch die Ketten hohen mechanischen Belastungen ausgesetzt.

### DARSTELLUNG DER ERFINDUNG

Es ist Aufgabe der Erfindung, eine insbesondere für die Umsetzung von transportierten Gegenständen geeignete Transportvorrichtung zu schaffen, welche die Nachteile bekannter Vorrichtungen vermeidet und sich insbesondere durch einen einfachen und robusten Aufbau auszeichnet, und mit einem Minimum an Steuerungstechnik und bewegten Teilen auskommt.

Die Aufgabe wird durch die Gesamtheit der Merkmale des Anspruchs 1 gelöst. Der Kern der Erfindung ist darin zu sehen, dass zum Anheben der Gegenstände während des Transports von der ersten zur zweiten Ebene ein auf dem Rücken des wenigstens einen Riemens angeordnetes, sich über einen längeren Abschnitt des Riemens erstreckendes Rückenprofil vorgesehen ist, welches dem Riemen eine erhöhte Dicke verleiht, wobei der wenigstens eine Riemen relativ zu den beiden Ebenen so angeordnet ist, dass er mit seinem Rücken ohne das Rückenprofil auf dem Niveau der beiden Ebenen oder darunter liegt und mit dem Rückenprofil über das Niveau der beiden Ebenen nach oben hinausragt. Der Riemen schiebt sich von der Seite mit dem Rückenprofil zunehmend unter den zu transportierenden Gegenstand und hebt ihn dabei an dieser Seite beginnend zunehmend an, bis er frei kommt und durch den Riemen mitgenommen wird. Das "Aufgleiten" des Behälters auf das Rückenprofil stellt dabei sicher, dass Strukturen im inneren Bodenbereich des Gegenstands den Transport praktisch nicht beeinflussen.

Gemäss einer bevorzugten Ausgestaltung umfasst die Transportvorrichtung nach der Erfindung wenigstens zwei parallel nebeneinander angeordnete Riemen, welche jeweils ein Rückenprofil aufweisen, wobei sich die Rückenprofile aller Riemen synchron bewegen.

Grundsätzlich können die Rückenprofile Unterbrechungen aufweisen, um die Biegsamkeit der Riemen zu erhöhen. Die Transportvorrichtung gestaltet sich jedoch besonders einfach, wenn gemäss einer anderen Ausgestaltung der Erfindung die Rückenprofile durchgehend ausgebildet sind.

Zur Vereinfachung trägt auch bei, wenn die Dicke der Riemen im Bereich der Rückenprofile im wesentlichen konstant ist.

Das Aufgleiten der Gegenstände auf die Rückenprofile kann dadurch erleichtert werden, dass am Anfang und/oder am Ende der Rückenprofile zur Vergleichmässigung des Übergangs zwischen den unterschiedlichen Dicken eine Schräge vorgesehen ist.

Eine andere Ausgestaltung der Erfindung ist dadurch gekennzeichnet, dass bei dem wenigstens einen Riemen das Rückenprofil durch nachträgliches Aufbringen von zusätzlichem Material auf einen Riemen konstanter Dicke erzeugt worden ist.

Bevorzugt liegt der Dickenzuwachs des wenigstens einen Riemens im Bereich des Rückenprofils im Bereich von einigen 1/10 mm bis zu einigen mm.

Eine weitere Ausgestaltung der Erfindung zeichnet sich dadurch aus, dass die Länge des Rückenprofils in etwa so gross ist wie die lineare Abmessung der zu transportierenden Gegenstände in Transportrichtung.

Vorzugsweise ist der wenigstens eine Riemen als Zahnriemen ausgebildet.

In Falle der Verwendung von wenigstens zwei Riemen ist es günstig, wenn die wenigsten zwei Riemen über eine gemeinsame Antriebswelle synchron angetrieben werden.

Weiterhin ist es von Vorteil, wenn der wenigstens eine Riemen im Bereich der beiden Ebenen in einer Führungsschiene läuft.

Um eine exakte Positionierung der Gegenstände nach dem Transport sicherzustellen, ist es von Vorteil, wenn in Transportrichtung gesehen am Ende der zweiten Ebene ein Anschlag zum Stoppen der transportierten Gegenstände angeordnet ist.

Der Transport lässt sich weiter verbessern, wenn gemäss einer anderen Ausgestaltung der Erfindung die beiden Ebenen voneinander beabstandet sind, und zwischen den Ebenen ein über die Ebenen hinausragendes stationäres Stützelement vorgesehen ist, welches in der Höhe mit dem Rückenprofil des wenigstens einen Riemens korrespondiert.

Bevorzugt ist als Stützelement eine quer zur Transportrichtung liegende Zwischenrolle vorgesehen.

Insbesondere wird die erste und/oder die zweite Ebene durch eine Rollenbahn gebildet, deren Transportrichtung quer zur Transportrichtung der Transportvorrichtung orientiert ist.

In diesem Fall verläuft der wenigstens eine Riemen der Transportvorrichtung bevorzugt zwischen benachbarten Rollen der Rollenbahn bzw. Rollenbahnen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Gesamtansicht eine beispielhafte Behälter-Entladeanlage mit einer ersten Rollenbahn zur Zuführung der Behälter und einer zweiten Rollenbahn innerhalb der eigentlichen Entladevorrichtung, wobei für den Quertransport zwischen den beiden Rollenbahnen eine Transportvorrichtung nach der Erfindung vorgesehen werden kann;
- Fig. 2: in verschiedenen Teilfiguren 2(a) bis 2(f) verschieden Schritte beim Transport eines Behälters mit einer Transportvorrichtung gemäss einem Ausführungsbeispiel der Erfindung;
- Fig. 3: in einer perspektivischen Seitenansicht zwei parallele Rollenbahnen gemäss Fig. 1, die von einer Transportvorrichtung gemäss einem bevorzugten Ausführungsbeispiel der Erfindung durchsetzt sind;
- Fig. 4: die Transportvorrichtung aus Fig. 3 und ihre Anordnung in der einen Rollenbahn; und
- Fig. 5: die Transportvorrichtung aus Fig. 3 für sich genommen ohne die Rollenbahnen.

### WEGE ZUR AUSFÜHRUNG DER ERFINDUNG

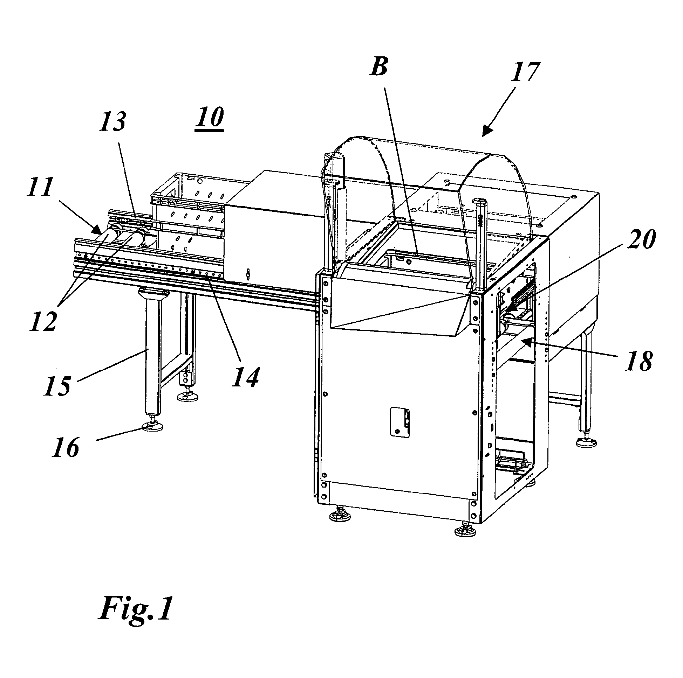

In Fig. 1 ist in einer perspektivischen Gesamtansicht eine beispielhafte Behälter-Entladeanlage gezeigt, in welcher die Transportvorrichtung nach der Erfindung mit Vorteil eingesetzt werden kann. Zentraler Bestandteil der Behälter-Entladeanlage 10 der Fig. 1 ist eine Entladevorrichtung 17, in welcher ein oben offener, mit Gegenständen wie z.B. Postgut gefüllter Behälter B entladen werden kann. Innerhalb des Entladevorgangs wird der auf einer internen Rollenbahn 18 stehende Behälter B durch einen Schwenkmechanismus erfasst und so um eine horizontale Achse geschwenkt, dass der Inhalt bei schräg stehendem durch eine Bedienperson leicht herausgenommen werden kann, oder von selber herausfällt.

Parallel zur internen Rollenbahn 18 ist aussen an der Entladevorrichtung 17 eine zweite, äussere Rollenbahn 11 angeordnet, über die zu entladende Behälter an die Entladevorrichtung 17 herangeführt werden. Die Behälter B bewegen sich über die Rollen 12 der Rollenbahn 11 und werden seitlich durch die Seitenwände 13, 14 der Rollenbahn 11 geführt. Die Rollenbahn 11 steht auf Beinen 15. Ihre Höhe kann mittels Stellfüssen 16 dem Niveau der internen Rollenbahn 18 angepasst werden.

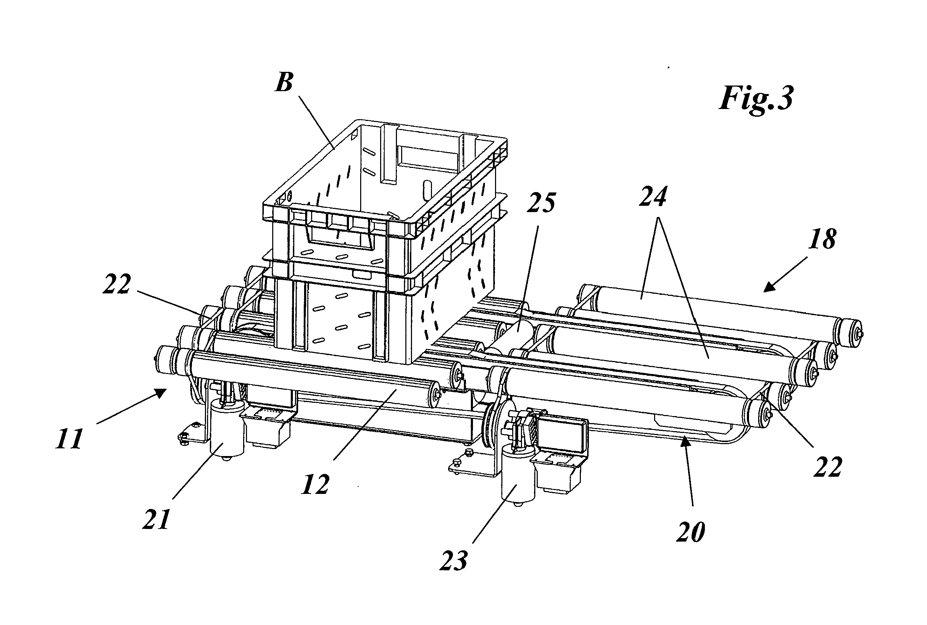

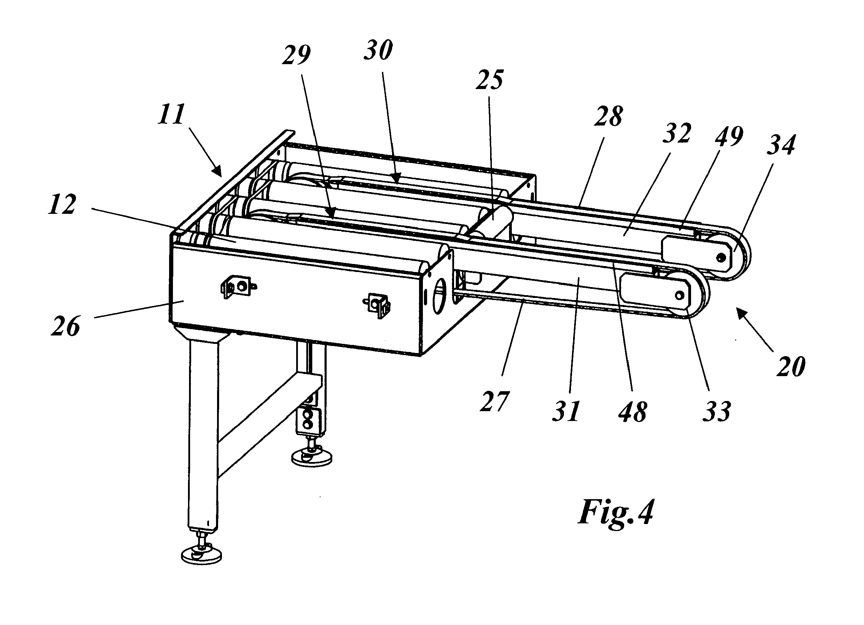

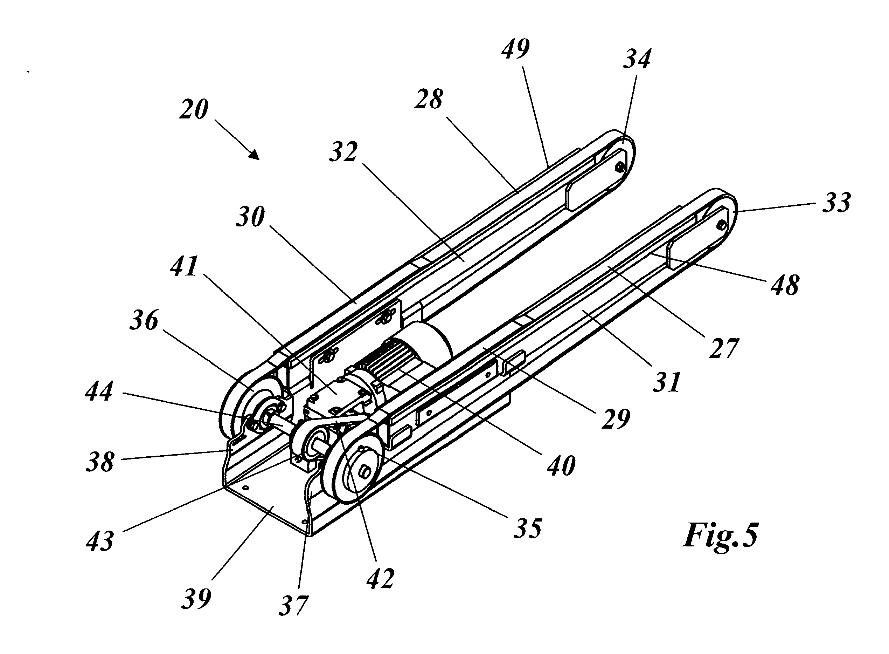

Im Endbereich der äusseren Rollenbahn 11 ist eine Transportvorrichtung 20 vorgesehen, welche die beiden Rollenbahnen 11 und 18 quer durchsetzt und zum Quertransport der Behälter B von der einen Rollenbahn 11 zur anderen Rollenbahn 18 eingesetzt wird. Die Transportvorrichtung 20, auf die sich die vorliegende Erfindung bezieht, ist in einem Ausführungsbeispiel in den Fig. 3, 4 und 5 dargestellt, und zwar in der Zusammenschau mit beiden Rollenbahnen 11 und 18 (Fig. 3), nur mit der äusseren Rollenbahn 11 (Fig. 4), und in Alleinstellung ohne die Rollenbahnen (Fig. 5).

Die Transportvorrichtung 20 ist auf einem U-förmig gebogenen Chassis 39 ausgebaut, dessen beide Seitenwände 37 und 38 zur längsverstellbaren Befestigung zweier parallel laufender Schwerter 31, 32 dienen. An den vorderen Enden der beiden Schwerter 31, 32 ist jeweils eine Umlenkrolle 33, 34 drehbar gelagert. Am anderen Ende ist in den Seitenwänden des Chassis 39 eine Antriebswelle 44 drehbar gelagert, auf deren äusseren Enden zwei Antriebsräder 35, 36 drehfest angeordnet sind. Die Antriebsräder 35, 36 fluchten mit den Umlenkrollen 33, 34 am vorderen Ende der Schwerter 31, 32 und bilden mit ihnen jeweils ein Räder-Paar, um das ein Zahnriemen 27 bzw. 28 in einer Endlosschleife läuft. Auf der Antriebswelle 44 sitzt drehfest ein Zahnrad 43, das über einen Zahnriemen 42 und ein Getriebe 41 von einem Elektromotor 40 angetrieben wird. Getriebe 41 und Motor 40 sind auf dem Boden des Chassis 39 befestigt. Die beiden Schwerter 31, 32 sind so schmal gehalten, dass sie - wie aus Fig. 3 und 4 zu erkennen ist - zwischen benachbarte Rollen 12 bzw. 24 der Rollenbahnen 11 bzw. 18 passen. Der Antrieb der Rollen 12 bzw. 24 der Rollenbahnen 11 bzw. 18 erfolgt durch Elektromotoren 21 bzw. 23. Zur alternierenden, paarweisen Kopplung der Rollen 12 bzw. 24, welche gewährleistet, dass die Schwerter 31, 32 die beiden Rollenbahnen 11, 18 ungehindert durchsetzen können, sind Antriebsriemen 22 vorgesehen. Die zum Transport der Behälter B eingesetzten Zahnriemen 27, 28 werden seitlich und in der Höhe in entsprechenden Führungsschienen 48, 49 geführt. Die Transportvorrichtung 20 kann - wie in Fig. 4 gezeigt - in einem eigenen Kasten 26 untergebracht werden, der dann mit weiteren Abschnitten zur äusseren Rollenbahn 11 ergänzt wird.

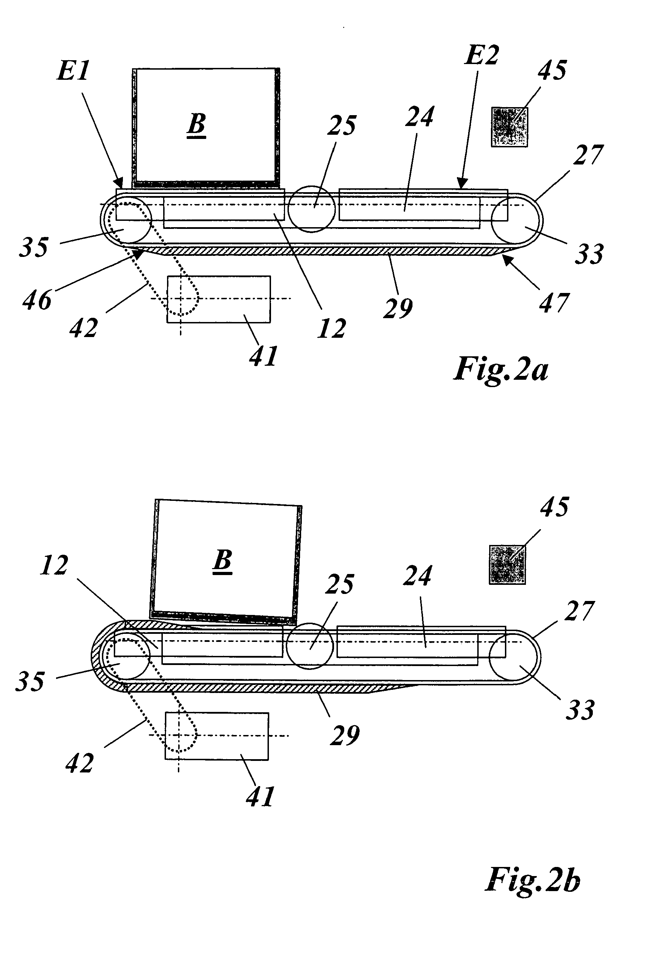

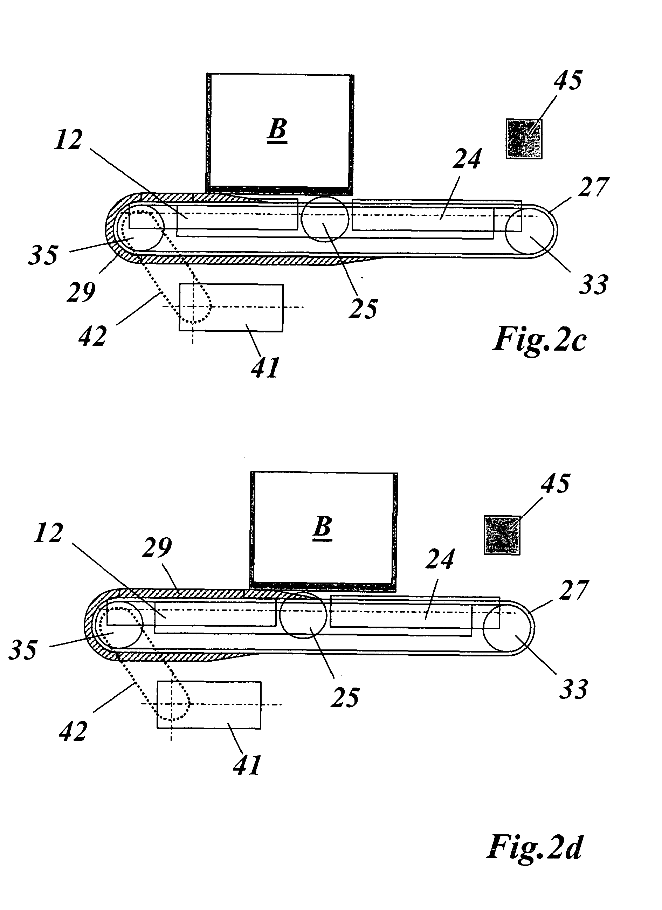

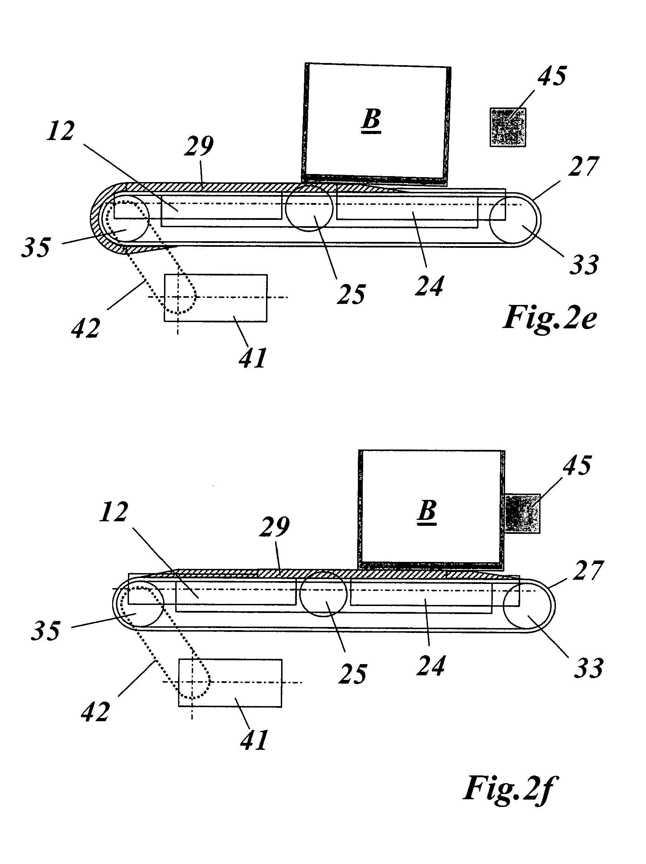

Für die transportbezogene Wechselwirkung zwischen den Zahnriemen 27, 28 und dem zu transportierenden Behälter B sind die beiden Zahnriemen mit einem sich über einen längeren Abschnitt der Zahnriemen 27, 28 erstreckenden Rückenprofil 29 bzw. 30 ausgestattet. Die zusätzliche Dicke des Rückenprofils 29, 30 liegt im Bereich von wenigen 1/10 mm bis zu einigen mm und ist in den Figuren übertrieben dargestellt. Die Rückenprofile 29, 30 werden auf übliche Zahnriemen konstanter Dicke zusätzlich aufgebracht. Sie stellen sicher, dass die Behälter B an der äusseren Rollenbahn 11 aufgenommen, zur internen Rollenbahn 18 transportiert und dort wieder abgesetzt werden. Der Ablauf dieses Transports ist in Fig. 2 in verschiedenen Schritten (Teilfiguren 2(a) bis 2(f)) leicht schematisiert wiedergegeben.

Gemäss Fig. 2a befindet sich der zu transportierende Behälter B zunächst auf der äusseren Rollenbahn mit den Rollen 12. Diese Rollenbahn bildet eine erste Ebene E1. Daneben befindet sich auf demselben Niveau und mit einem gewissen Abstand die interne Rollenbahn mit den Rollen 24 und bildet eine zweite Ebene E2. Beide Rollenbahnen werden durchsetzt von einem Zahnriemen 27, der um die Umlenkrolle 33 und das Antriebsrad 35 geführt ist. Das zugehörige Rückenprofil 29 ist stark überhöht gezeichnet. Ebenfalls überzeichnet sind die beiden Schrägen 46 und 47 am Anfang und am Ende des Rückenprofils 29, die das Auf- und Abgleiten des Behälters B am Rückenprofil 29 erleichtern. Soll der Behälter B von der ersten Ebene E1 zur zweiten Ebene E2 transportiert werden, wird der Zahnriemen 27 (wie auch der nicht gezeigte Zahnriemen 28) im Uhrzeigersinn rotierend bewegt, bis der Anfang des Rückenprofils 29 mit seiner Schräge unter die hintere Kante des Behälters B gleitet (Fig. 2b).

Bereits zu diesem Zeitpunkt wird der Behälter B vom Zahnriemen 27 ein Stück weit mitgenommen und trifft mit seiner vorderen Kante auf eine zwischen den beiden Rollenbahnen quer angeordnete Zwischenrolle 25. Die Zwischenrolle 25 bildet zwischen den Ebenen E1 und E2 ein über die Ebenen E1, E2 hinausragendes stationäres Stützelement, welches in der Höhe mit dem Rückenprofil 29 des Zahnriemens 27 korrespondiert. Dies hat zur Folge, dass der Behälter B beim Weitertransport durch die Zwischenrolle 25 an der vorderen Kante angehoben wird und vollständig auf die Zwischenrolle 25 rollt (Fig. 2c). Er kann dann mit der vorderen Kante ungehindert auf die zweite Ebene E2 aufgleiten (Fig. 2d).

Beim Weiterbewegen des Zahnriemens 27 wird der Behälter B weiter auf die zweite Ebene E2 geschoben, bis er schliesslich von einem Anschlag 45 in der vorgesehenen Endposition auf der zweiten Rollenbahn gestoppt wird (Fig. 2f). Der Zahnriemen 27 kann dann mit seinem Rückenprofil 29 unter dem Behälter im Uhrzeigersinn weggezogen werden, bis er wieder die in Fig. 2a dargestellte Ausgangs- und Warteposition erreicht.

Es versteht sich von selbst, dass die Transportrichtung auch umgekehrt werden kann.

Die erläuterte Transportvorrichtung hat insgesamt folgende Vorteile und Eigenschaften:
- Für alle Behältergrössen ergibt sich der gleiche Zyklus für Umsetzung bzw. den Transport;
- es wird ein Riemen mit Rückenprofil verwendet, der einfach herzustellen und funktionssicher;
- es ist eine Zwischenrolle für eine noch stabilere Behälterführung vorgesehen;
- die Vorrichtung ist wartungsarm; und
- sie hat einen modularer Aufbau (Zahnriemenantrieb), der einen flexiblen Einsatz ermöglicht.

### BEZUGSZEICHENLISTE

- 10: Behälter-Entladeanlage
- 11,18: Rollenbahn
- 12,24: Rolle
- 13,14: Seitenwand
- 15: Bein
- 16: Stellfuss
- 17: Entladevorrichtung
- 20: Transportvorrichtung
- 21,23: Elektromotor
- 22: Antriebsriemen
- 25: Zwischenrolle
- 26: Kasten
- 27,28: Zahnriemen
- 29,30: Rückenprofil (Zahnriemen)
- 31,32: Schwert
- 33,34: Umlenkrolle
- 35,36: Antriebsrad
- 37,38: Seitenwand
- 39: Chassis
- 40: Elektromotor
- 41: Getriebe
- 42: Zahnriemen
- 43: Zahnrad
- 44: Antriebswelle
- 45: Anschlag
- 46,47: Schräge
- 48,49: Führungsschiene
- B: Behälter

## Patentansprüche

1. Transportvorrichtung (20) zum Transport von Gegenständen, insbesondere Behältern (B), welche auf einer ersten Ebene (E1) liegen, von der ersten Ebene (E1) auf eine zweite Ebene (E2), die parallel zur ersten Ebene (E1) neben und in etwa auf dem Niveau der ersten Ebene (E1) angeordnet ist, welche Transportvorrichtung (20) wenigstens einen endlos umlaufenden Riemen (27, 28) umfasst, der im Bereich der beiden Ebenen (E1, E2) parallel zu den Ebenen (E1, E2) verläuft, sowie Mittel (25; 29, 30; 46, 47) zum Anheben der Gegenstände (B) während des Transports von der ersten (E1) zur zweiten Ebene (E2), **dadurch gekennzeichnet, dass** die Mittel zum Anheben der Gegenstände (B) ein auf dem Rücken des wenigstens einen Riemens (27, 28) angeordnetes, sich über einen längeren Abschnitt des Riemens (27, 28) erstreckendes Rückenprofil (29, 30) umfassen, welches dem Riemen (27, 28) eine erhöhte Dicke verleiht, und dass der wenigstens eine Riemen (27, 28) relativ zu den beiden Ebenen (E1, E2) so angeordnet ist, dass er mit seinem Rücken ohne das Rückenprofil (29, 30) auf dem Niveau der beiden Ebenen (E1, E2) oder darunter liegt und mit dem Rückenprofil (29, 30) über das Niveau der beiden Ebenen (E1, E2) nach oben hinausragt.

2. Transportvorrichtung nach Anspruch 2, **dadurch gekennzeichnet, dass** die Transportvorrichtung (20) wenigstens zwei parallel nebeneinander angeordnete Riemen (27, 28) umfasst, welche jeweils ein Rückenprofil (29 bzw. 30) aufweisen, und dass sich die Rückenprofile (29, 30) aller Riemen (27, 28) synchron bewegen.

3. Transportvorrichtung nach Anspruch 1 oder 2, **dadurch gekennzeichnet, dass** die Rückenprofile (29, 30) durchgehend ausgebildet sind.

4. Transportvorrichtung nach Anspruch 3, **dadurch gekennzeichnet, dass** die Dicke der Riemen (27, 28) im Bereich der Rückenprofile (29, 30) im wesentlichen konstant ist.

5. Transportvorrichtung nach Anspruch 4, **dadurch gekennzeichnet, dass** am Anfang und/oder am Ende der Rückenprofile (29, 30) zur Vergleichmässigung des Übergangs zwischen den unterschiedlichen Dicken eine Schräge (46, 47) vorgesehen ist.

6. Transportvorrichtung nach einem der Ansprüche 1 bis 5, **dadurch gekennzeichnet, dass** bei dem wenigstens einen Riemen (27, 28) das Rückenprofil (29, 30) durch nachträgliches Aufbringen von zusätzlichem Material auf einen Riemen konstanter Dicke erzeugt worden ist.

7. Transportvorrichtung nach einem der Ansprüche 1 bis 6, **dadurch gekennzeichnet, dass** der Dickenzuwachs des wenigstens einen Riemens (27, 28) im Bereich des Rückenprofils (29, 30) im Bereich von einigen 1/10 mm bis zu einigen mm liegt.

8. Transportvorrichtung nach einem der Ansprüche 1 bis 7, **dadurch gekennzeichnet, dass** die Länge des Rückenprofils (29, 30) in etwa so gross ist wie die lineare Abmessung der zu transportierenden Gegenstände (B) in Transportrichtung.

9. Transportvorrichtung nach einem der Ansprüche 1 bis 8, **dadurch gekennzeichnet, dass** der wenigstens eine Riemen als Zahnriemen (27, 28) ausgebildet ist.

10. Transportvorrichtung nach Anspruch 2, **dadurch gekennzeichnet, dass** die wenigsten zwei Riemen (27, 28) über eine gemeinsame Antriebswelle (44) synchron angetrieben werden.

11. Transportvorrichtung nach einem der Ansprüche 1 bis 10, **dadurch gekennzeichnet, dass** der wenigstens eine Riemen (27, 28) im Bereich der beiden Ebenen (E1, E2) in einer Führungsschiene (48, 49) läuft.

12. Transportvorrichtung nach einem der Ansprüche 1 bis 11, **dadurch gekennzeichnet, dass** in Transportrichtung gesehen am Ende der zweiten Ebene (E2) ein Anschlag (45) zum Stoppen der transportierten Gegenstände (B) angeordnet ist.

13. Transportvorrichtung nach einem der Ansprüche 1 bis 12, **dadurch gekennzeichnet, dass** die beiden Ebenen (E1, E2) voneinander beabstandet sind, und dass zwischen den Ebenen (E1, E2) ein über die Ebenen (E1, E2) hinausragendes stationäres Stützelement (25) vorgesehen ist, welches in der Höhe mit dem Rückenprofil (29, 30) des wenigstens einen Riemens (27, 28) korrespondiert.

14. Transportvorrichtung nach Anspruch 13, **dadurch gekennzeichnet, dass** als Stützelement eine quer zur Transportrichtung liegende Zwischenrolle (25) vorgesehen ist.

15. Transportvorrichtung nach einem der Ansprüche 1 bis 14, **dadurch gekennzeichnet, dass** die erste (E1) und/oder die zweite Ebene (E2) durch eine Rollenbahn (11, 18) gebildet wird, deren Transportrichtung quer zur Transportrichtung der Transportvorrichtung (20) orientiert ist.

16. Transportvorrichtung nach Anspruch 15, **dadurch gekennzeichnet, dass** der wenigstens eine Riemen (27, 28) der Transportvorrichtung (20) zwischen benachbarten Rollen (12, 24) der Rollenbahn bzw. Rollenbahnen (11, 18) verläuft.
